# EUROPÄISCHE PATENTANMELDUNG

(11) **EP 2 298 053 A2**
(43) Veröffentlichungstag der Anmeldung: **23.03.2011**
(21) Anmeldenummer: 10401119.2
(22) Anmeldetag: 22.07.2010
(51) Int. Cl.: A01B 73/00

(54) **Landwirtschaftliche Verteilmaschine**

(30) Priorität: 30.07.2009 DE 102009026290
(71) Anmelder: Amazonen-Werke H. Dreyer GmbH & Co. KG, 49205 Hasbergen (DE)
(72) Erfinder: Tiessen, Reimer Uwe, 26135 Oldenburg (DE); van Zoest, Ralf, 46767 Twist (DE); Schröder, Olaf, 27798 Hude (DE)

(57) **Zusammenfassung**

Landwirtschaftliche Verteilmaschine mit einem Zentralrahmen, einem auf dem Zentralrahmen angeordneten Vorratsbehälter und seitlich des Zentralrahmens angeordneten und seitlich an dem Vorratsbehälter anklappbaren Seitenrahmen, wobei der Verteilmaschine eine sich über eine größere Länge erstreckende und vorzugsweise als Förderschnecke ausgebildete Befülleinrichtung zum Befüllen des Vorratsbehälters mit den auszubringenden Material zugeordnet ist, wobei die Befülleinrichtung mit einer Schwenkeinrichtung am Zentralrahmen angeordnet und aus seiner schräg aufwärts ansteigenden Befüllstellung in eine eingeschwenkte Transportstellung bringbar ist, wobei die Befülleinrichtung mittels der Schwenkeinrichtung zur Verbringung in die Transportstellung zumindest teilweise in eine Position oberhalb des Vorratsbehälters bringbar ist. Um eine einfache Anordnung der Befülleinrichtung und ein einfaches Verbringen der Befülleinrichtung in eine kompakte Transportstellung vorzuschlagen, ist vorgesehen, dass die Befülleinrichtung aus zwei mittels einem Gelenkelement miteinander verbundenen Teilsegmenten besteht, dass das an der Schwenkeinrichtung angeordnete Teilsegment (in eine aufrechte Position an die Seitenwand des Vorratsbehälters (heranschwenkbar und das sich anschließende Teilsegment über das Gelenkelement in liegender Weise auf die Oberseite des Vorratsbehälters verschwenkbar ist.

## Beschreibung

Die Erfindung betrifft eine landwirtschaftliche Verteilmaschine gemäß des Oberbegriffes des Patentanspruches 1.

Eine derartige Verteilmaschine beispielsweise durch die DE 10 2007 014 791 A1 bekannt. Bei dieser Verteilmaschine befindet sich die Befülleinrichtung während des Befüllvorganges in schräg ansteigender Weise seitlich neben dem Behälter, um so den Vorratsbehälter von oben befüllen zu können. Nach dem Befüllen wird die Förderschnecke in ihrer Gesamtheit mittels eines Schwenkgestänges in eine Transportstellung gebracht, in welcher sie sich oberhalb des Vorratsbehälters befindet. Durch das Verbringen der Förderschnecke in die Transportstellung oberhalb des Behälters ist eine aufwendige Schwenkvorrichtung erforderlich. Außerdem erstreckt sich die Förderschnecke in Transportstellung über eine große Länge oberhalb des Vorratsbehälters.

Der Erfindung liegt die Aufgabe zugrunde, eine einfache Anordnung der Befülleinrichtung und ein einfaches Verbringen der Befülleinrichtung in eine kompakte Transportstellung vorzuschlagen.

Diese Aufgabe wird erfindungsgemäß dadurch gelöst, dass die Befülleinrichtung aus zwei mittels einem Gelenkelement miteinander verbundenen Teilsegmenten besteht, dass das an der Schwenkeinrichtung angeordnete Teilsegment in eine aufrechte Position an die Seitenwand des Vorratsbehälters heranschwenkbar und das sich anschließende Teilsegment über das Gelenkelement in liegender Weise auf die Oberseite des Vorratsbehälters verschwenkbar ist. Infolge dieser Maßnahmen lässt sich der eine Teil der geteilten Förderschnecke in eine aufrechte Position unmittelbar an den Vorratsbehälter auf den Vorratsbehälter klappen. Hierdurch ergibt sich eine sehr einfache Ausgestaltung der Mittel, um die Fördereinrichtung quasi in L-förmiger oder winkelförmiger Weise in eine Transportstellung zu bringen, in welcher sie den Vorratsbehälter seitlich und oben umschließt.

Durch das Anklappen des Teilsegmentes vor dem Ende der Seitenrahmen seitlich an den Vorratsbehälter der Verteilmaschine ergibt sich eine äußerst vorteilhafte Transportstellung für die Befülleinrichtung.

Eine einfache Ausgestaltung der Schwenkeinrichtung lässt sich dadurch erreichen, dass die Schwenkeinrichtung als Schwenkgestänge ausgebildet ist.

Eine vorteilhafte Anordnung von Befülleinrichtung und Vorratsbehälter und Seitenrahmen zueinander ergibt sich dadurch, dass der Vorratsbehälter die einklappbaren Seitenrahmen nach vorn überragt.

Ein einfaches Verbringen der Förderschnecke in die Transportstellung lässt sich dadurch erreichen, dass der Einfüllbereich der Befülleinrichtung an den unteren Bereich des Vorratsbehälters heranschwenkbar ist.

Weitere Einzelheiten der Erfindung sind der Beispielsbeschreibung und den Zeichnungen zu entnehmen. Hierbei zeigen
- Fig. 1: die Verteilmaschine mit der sich in Befüllstellung befindlichen Befülleinrichtung in perspektivischer,
- Fig. 2: die Verteilmaschine mit der sich in Befüllstellung befindlichen Befülleinrichtung in Vorderansicht Darstellung,
- Fig. 3: die Befüllschnecke in Befüllposition in Vorderansicht,
- Fig. 4: die Verteilmaschine mit der sich in Transportstellung befindlichen Befülleinrichtung in perspektivischer Darstellung,
- Fig. 5: die Verteilmaschine mit der sich in Transportstellung befindlichen Befülleinrichtung in Vorderansicht und
- Fig. 6: die Befüllschnecke in Transportposition in Vorderansicht.

Die Verteilmaschine ist als pneumatische Sämaschine ausgebildet. Sie weist einen Zentralrahmen 1 mit einer auf der Vorderseite des Zentralrahmens angeordneten Zugvorrichtung 2 und einem auf der Rückseite des Zentralrahmens angeordneten Fahrwerk 3 auf. Auf dem Zentralrahmen 1 ist der Vorratsbehälter 4 angeordnet. An der Rückseite des Zentralrahmens sind mittels einer Klapp- und Schwenkvorrichtung Säschare 5 tragende Seitenrahmen 6 angeordnet, die seitlich des Zentralrahmens 1 in der Transportstellung angeordnet und seitlich an den Vorratsbehälter 4 anklappbar sind. Aus Gründen der Übersichtlichkeit ist lediglich der in Fahrtrichtung linke Seitenrahmen 6 mit den Säscharen 6 dargestellt.

Zum Befüllen des Vorratsbehälters 4 mit dem auszubringenden Material ist der Verteilmaschine eine sich über eine größere Länge erstreckende und als Förderschnecke 7 ausgebildete Befülleinrichtung zugeordnet.

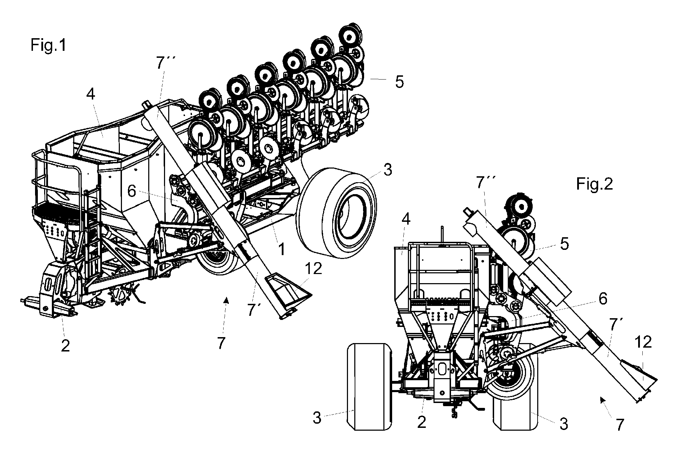

Die Befülleinrichtung 7 ist mittels der Schwenkeinrichtung 8 an dem Zentralrahmen 1 über geeignete Befestigungsmittel 9 angeordnet. Die Befülleinrichtung 7 befindet sich in der Befüllstellung in einer schräg aufwärts ansteigenden Position seitlich des Vorratsbehälters 4, wie die Fig. 1 und 2 zeigen.

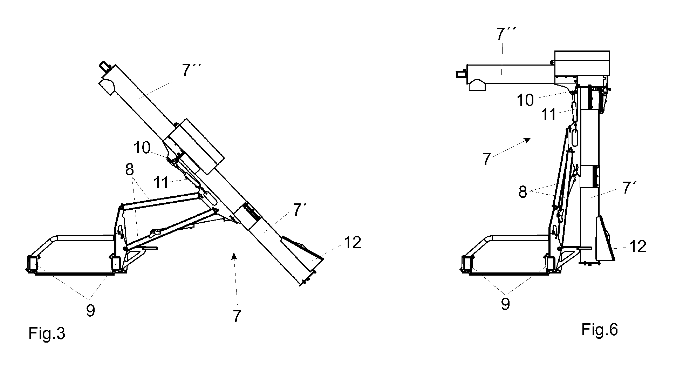

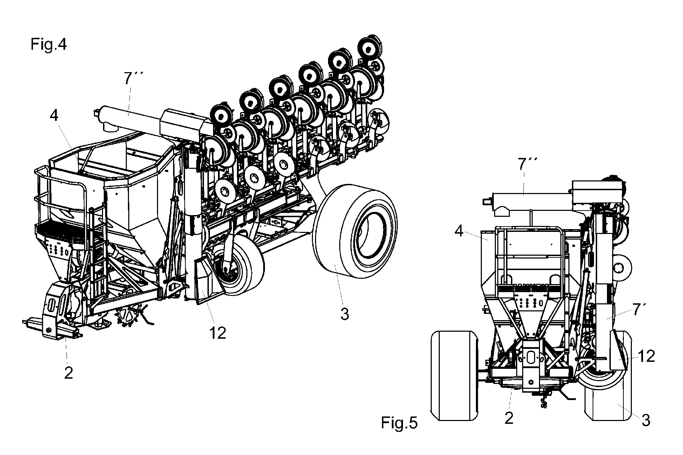

Die als Förderschnecke 7 ausgebildete Befülleinrichtung besteht aus zwei mittels eines Gelenkelementes 10 miteinander verbundenen Teilsegmente 7' und 7". Das untere Teilsegment 7' ist mittels geeigneter Befestigungseinrichtungen an der Schwenkeinrichtung 8 angeordnet. Das obere Teilsegment 7" der Förderschnecke 7 ist mittels eines Gelenkelementes 10 an dem unteren Teilsegment 7' befestigt. Zwischen dem unteren 7' und oberen Teilsegment 7" ist im Bereich des Gelenkelementes 10 ein als Hydraulikzylinder 11 ausgebildetes Schwenkelement angeordnet, um die beiden Teilsegmente 7' und 7" in die in Fig. 1 bis 3 dargestellte gestreckte Lage einzustellen und zu halten und andererseits in die in Fig. 4 bis 6 dargestellter L-förmige oder winkelförmiger Position für die Transportstellung zu bringen und zu fixieren.

Wie die Zeichnungen zeigen überragt der Vorratsbehälter 4 die eingeklappten Seitenrahmen 6 nach vorn.

Über die Schwenkeinrichtung 8 lässt sich die Befülleinrichtung 7 in eine aufrechte Position an die Seitenwand des Vorratsbehälters 4 heranschwenken, wie die Fig. 4 und 5 zeigen. Das sich an dem unteren Teilsegment 7' über das Gelenkelement 10 anschließende obere Teilsegment 7" lässt sich über den Hydraulikzylinder 11 gegenüber dem unteren Teilsegment 7' verschwenken, so dass es in eine liegende Position auf die Oberseite des Vorratsbehälters 4 verschwenkbar ist. Hierbei nehmen dann das untere 7' und obere Teilsegment 7" der Förderschnecke 7 eine winkelförmige bzw. L-förmige Position zueinander ein. Hierbei umschließt das untere 7' und obere Teilsegment 7" in anschmiegender Weise den Vorratsbehälter 4 seitlich und oberhalb. Aufgrund dieser Ausgestaltung ist der Einfüllbereich 12 der Befülleinrichtung 7 an den unteren Bereich des Vorratsbehälters 4 heranzuschwenken, wie die Fig. 4 und 5 zeigen.

Anzahl Anhängende Zeichnungen: [6]

## Patentansprüche

1. Landwirtschaftliche Verteilmaschine mit einem Zentralrahmen, einem auf dem Zentralrahmen angeordneten Vorratsbehälter und seitlich des Zentralrahmens angeordneten und seitlich an dem Vorratsbehälter anklappbaren Seitenrahmen, wobei der Verteilmaschine eine sich über eine größere Länge erstreckende und vorzugsweise als Förderschnecke ausgebildete Befülleinrichtung zum Befüllen des Vorratsbehälters mit den auszubringenden Material zugeordnet ist, wobei die Befülleinrichtung mit einer Schwenkeinrichtung am Zentralrahmen angeordnet und aus seiner schräg aufwärts ansteigenden Befüllstellung in eine eingeschwenkte Transportstellung bringbar ist, wobei die Befülleinrichtung mittels der Schwenkeinrichtung zur Verbringung in die Transportstellung zumindest teilweise in eine Position oberhalb des Vorratsbehälters bringbar ist, **dadurch gekennzeichnet, dass** die Befülleinrichtung (7) aus zwei mittels einem Gelenkelement (8) miteinander verbundenen Teilsegmenten (7',7") besteht, dass das an der Schwenkeinrichtung (8) angeordnete Teilsegment (7') in eine aufrechte Position an die Seitenwand des Vorratsbehälters (4) heranschwenkbar und das sich anschließende Teilsegment (7") über das Gelenkelement (8) in liegender Weise auf die Oberseite des Vorratsbehälters (4) verschwenkbar ist.

2. Verteilmaschine nach Anspruch 1, **dadurch gekennzeichnet, dass** Teilsegment (7') vor den Enden der anklappbaren Seitenrahmen (6) seitlich des Vorratsbehälters (4) an der Verteilmaschine angeordnet ist.

3. Verteilmaschine nach Anspruch 1, **dadurch gekennzeichnet, dass** die Schwenkeinrichtung (8) als Schwenkgestänge ausgebildet ist.

4. Verteilmaschinen nach Anspruch 1, **dadurch gekennzeichnet, dass** der Vorratsbehälter (4) die einklappbaren Seitenrahmen (6) nach vorn überragt.

5. Verteilmaschine nach Anspruch 1, **dadurch gekennzeichnet, dass** der Einfüllbereich (11) der Befülleinrichtung (7) an den unteren Bereich des Vorratsbehälters (4) heranschwenkbar ist.
